# EUROPÄISCHE PATENTANMELDUNG

(11) **EP 1 296 429 A1**
(43) Veröffentlichungstag der Anmeldung: **26.03.2003**
(21) Anmeldenummer: 01810917.3
(22) Anmeldetag: 21.09.2001
(51) Int. Cl.: H02G 3/06

(54) **Massnahme zur Abzweigung von Kabeln aus einem Kabelkanal**

(71) Anmelder: MDM Elektrosystem AG, 8622 Wetzikon (CH)
(72) Erfinder: Honegger, Kurt, 8636 Wald (CH)
(74) Vertreter: Frei, Alexandra Sarah

(57) **Zusammenfassung**

Gegenstand der Anmeldung ist eine Massnahme zum Abzweigen von Kabeln (S, D, B) vor Ort an einem Kabelkanal. Am gewünschten Ort wird an einer Stelle am Kanal eine Öffnung (O) erzeugt. Mit Abzweigvorrichtungen (30, 31) werden Nebenkabel von Kabeln abgezweigt, und anschliessend ein die Öffnung teilweise verdeckendes Abdeckelement aufgesetzt und befestigt, so dass die abgezweigten Kabel durch eine Aussparung (A) aus dem Abdeckelement aus dem Kabelkanal herausführbar sind.

## Beschreibung

Die Erfindung betrifft die Ausgestaltung von Kabelkanälen bzw. Brüstungskanälen zur Führung und Verteilung von Leitungen, sowie eine Massnahme auch bei bestehenden Kabelkanälen bzw. Brüstungskanälen die erfinderische Ausgestaltung einzubringen.

Im herkömmlichen Stand der Technik zweigen Steckdosen und andere Anschlüsse vom Kabelkanal nach vorne weg. Diese Anordnung macht die Anschlussstellen anfällig für Beschädigungen, bspw. wenn jemand vorbeigehend die vorstehenden Teile streift, ferner wird die gängige Anordnung auch als wenig ästhetisch empfunden. Dazu kommt, dass nur eine beschränkte Anzahl Anschlüsse möglich sind. Bei neueren Entwicklungen sind Steckdosen und Anschlüsse im Kanal angeordnet, was bei von aussen eingebauten Steckdosen zu aufwändigen Installationen führt und bei innen im Kanal platzierten und montierten Steckdosen praktisch der ganze Kabelraum benötigt wird, sodass der verfügbare Querschnitt für die durchgeführten Kabel im Bereich der Anschlusseinheit ungenügend ist. Das nachträgliche Einziehen, oder besser gesagt, ein kniffliges Einfädeln zusätzlicher Leitungen ist dann praktisch fast unmöglich. Um das nachträgliche Einziehen von zusätzlichen Leitungen zu erleichtern wurde eine Lösung mit schwenkbarem Steckergehäuse entwickelt (EP 1 098 409, Figur 3). Diese Form des Vorgehens löst das Problem jedoch nur teilweise, weil die Beschränkung der Anzahl Steckdosen bestehen bleibt und der Platz in Kanal so beschränkt bleibt wie vorher.

Der erfinderische Ansatz geht von folgendem Gedanken, der diese Nachteile aus der Welt schafft, aus. Der Kabelkanal soll von platz- bzw. raumintensiven Steckdosen und Anschlüssen 'befreit' werden; diese Armaturen sollen ausgelagert und auf dem Tisch, bspw. an einem 'Satelliten', ein kleiner Kasten mit verschiedenen Steckdosen, angeordnet werden, wo wesentlich mehr Platz dafür vorhanden ist. Ein solcher Satellit kann auf dem Tisch oder dem Möbel oder unter dem Tisch platziert werden, so wie es die Umstände erlauben. Die Anschlusskabel gehen vom Satelliten zum Brüstungskanal und sind dort platzsparend angeschlossen. Am bzw. im Brüstungskanal selber ist ein Zwischenverteiler angeordnet an welchem die Kabel vom Satelliten einerseits und vom Kabelkanal andererseits angeschlossen werden können. Der Zwischenverteiler beansprucht nur einen Bruchteil des Platzes, welchen die direkt am oder im Kabelkanal angeordneten Armaturen einnehmen würden.

Das Resultat dieser Massnahme ist erstaunlich: es braucht zur Realisierung dieses nützlichen Vorgehens als Aufwand nur wenige Mittel, als Beispiel, eine Grundplatte zur Aufnahme von Befestigungsmittel, ein Rahmen mit Klappdeckel, bestehende Kabelanschlüsse, bestehende Bus-Anschlüsse, ein Anschlussblech für oder mit bestehenden Datensteckdosen und etwas Montagematerial. Die 'bestehenden' also handelsüblichen Anschlüsse sind in den nachfolgenden Beispielen solche aus dem Hause der Anmelderin.

Durch die erfindungsgemässe Massnahme ist im Schnittstellenbereich ein perfekter Schutz vor mechanischen Einwirkungen gegeben, welche bspw. beim Ummöblieren oder einfach beim streifenden Vorbeigehen leicht Beschädigungen verursachen können. Dies trotz der Einfachheit der erfindungsgemässen Lösung im Vergleich zu bestehenden, teuren Lösungen.

Ein weiterer Vorteil ist Folgender: Dadurch, dass am Datenkanal selbst äusserlich keine Steckdosen oder Steckbuchsen mehr anzubringen sind, muss auch bei der Wahl von Steckdosen keine Rücksicht mehr auf das Design genommen werden. Dies kann zur Attraktivität der erfindungsgemässen Massnahme beitragen, denn das Angewiesen sein auf bestehende Steckdosen mit speziellen, der Umgebung angepassten Design-Features könnte das Abzweigen von Kabeln verteuern.

Anhand der nachfolgend aufgeführten Figuren wird ein Ausführungsbeispiel der erfindungsgemässen Massnahme diskutiert. In Kenntnis der Erfindung sind weitere abgeleiteten Varianten möglich. Wie man auf der 'Baustelle' in den verschiedenen Fällen vorgehen soll, wird in einem Vorgehensverfahren erläutert.
- Figur 1: zeigt eine Einbauöffnung an einem Kabelkanal oder Brüstungskanal im fertigen Zustand mit den Anschlüssen zum oder zu den Anschlussboxen (Satelliten).
- Figur 2A: zeigt die Einbauöffung gemäss Figur 1 mit geöffnetem Klappdeckel
- Figur 2 B: den die Einbauöffung gemäss Figur 2A mit ganz entferntem Rahmen.
- Figur 3: zeigt ein Kabelbündel mit den entsprechenden Abzweigungen, wie es in einem üblichen Kabelkanal geführt wird.
- Figur 4: zeigt unter anderem, wie in einfacher Weise ein zusätzliches Kabel oder Kabelbündel in einen bestehenden Kabelkanal, die mit der Vorrichtung gemäss Erfindung bestückt ist, eingelegt und beliebig verzweigt werden kann.

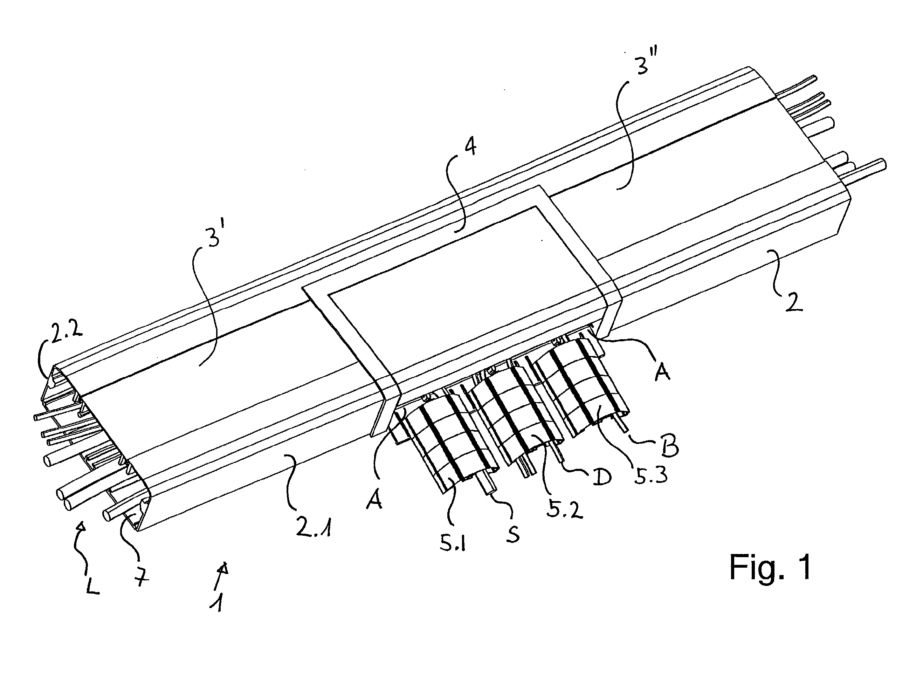

Kabelkanäle laufen einer Brüstung entlang oder sind in einer Rinne im Boden oder sonstwie angeordnet. Mit der hier beschriebenen Massnahme versehen weisen sie für die Montage der Kabel an die Anschlussstellen der Armaturen, bspw. Steckdosen, eine wegnehmbare Abdeckung auf, um im Kanal Montagen vornehmen zu können. In Figur 1, welche ausschnittweise ein Teilstück eines beliebig langen Kabelkanals 1 mit der erfinderischen Massnahme zeigt, nämlich ein Oberteil 3, Seitenteil 2 (Vorderseite 2.1 und Hinterseite 2.2) und Kanalboden 7 mit einer Anzahl darin verlaufenden Leitungen L, ist diese wegnehmbare Abdeckung als ein im Oberteil längsverlaufendes, herausnehmbares Mittelteil 3';3" angeordnet. In der Mitte des Kabelkanals 1 erkennt man auf der Oberseite 3 einen Rahmen 4, der auf der Vorderseite nach unten verläuft und eine Aussparung A mit drei gezeigten Anschlussstellen 5.1;5.2;5.3 sozusagen einrahmt. Diese drei Anschlussstellen verlaufen hier in flexiblen Kabelkanälen wie sie im Haus der Anmelderin hergestellt werden, in denen verschiedene Leitungen, hier Stromkabel S, Datenleitungen D, eine Busleitung B weggeführt und zu den oder dem Satelliten (nicht gezeigt) hingeführt werden. Durch diese Anordnung wird eine Schutz gegen eine äussere mechanische Einwirkung erreicht, und die Einheit macht einen sauberen und abgeschlossenen Eindruck.

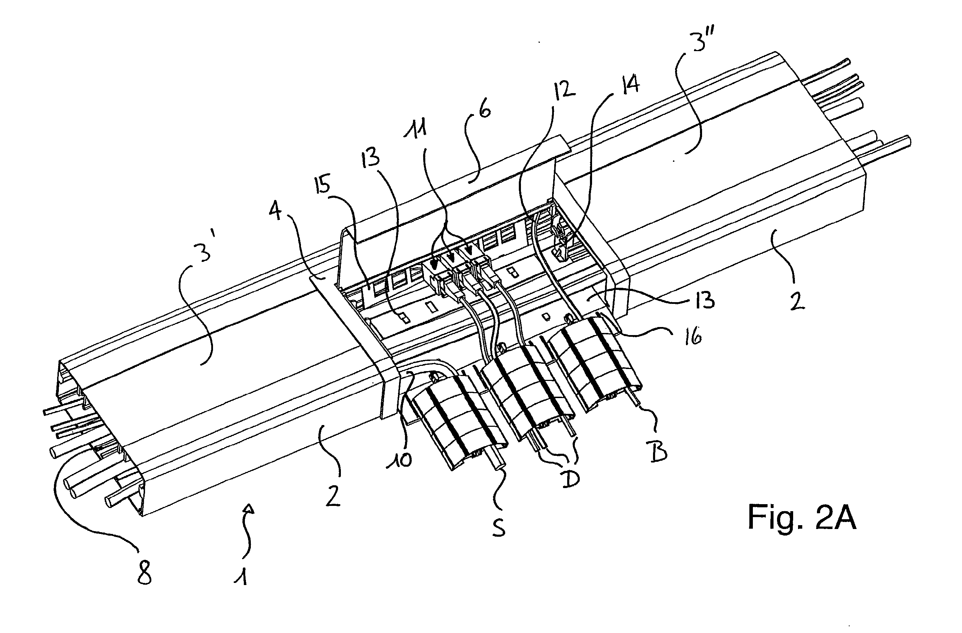

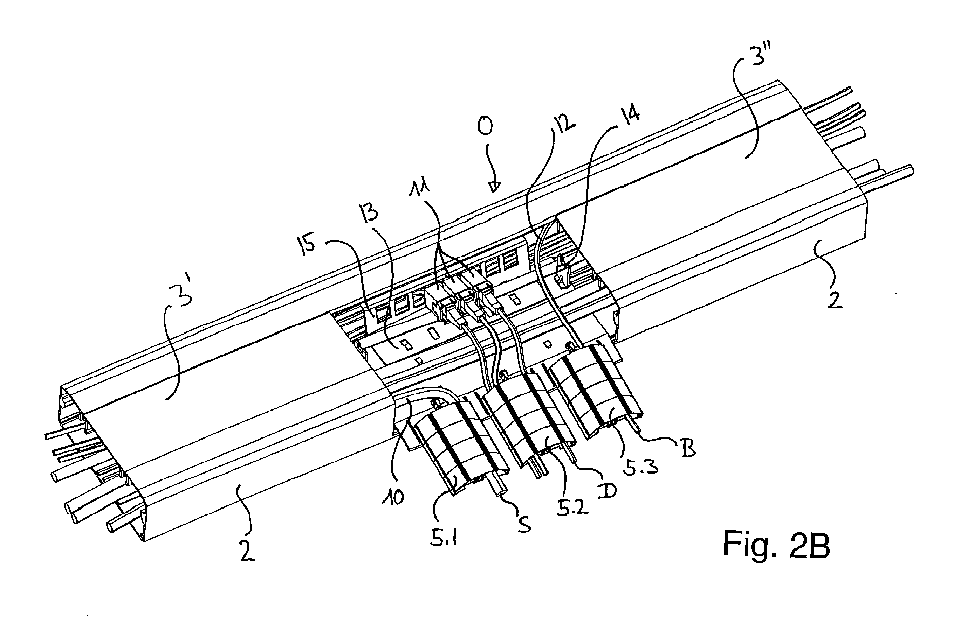

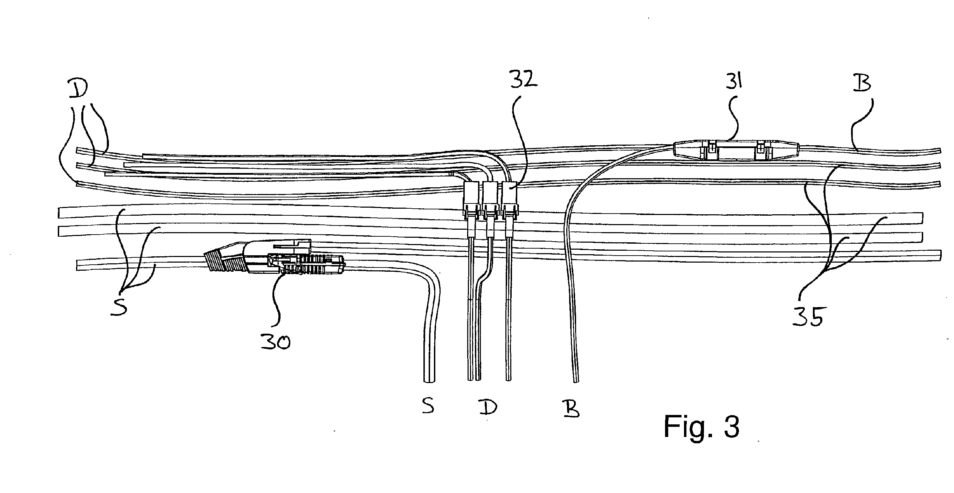

Figur 2A zeigt das Kabelkanalstück 1 von Figur 1 mittels eines hochgeklappten Deckels 6 im geöffneten Zustand. Im Innern erkennt man eine Abzweigung für die Stromversorgung 10 und eine Abzweigung für eine Busleitung 12 und eine Anzahl Abzweigungen mit Daten-Steckbuchsen 11, die je an eine Datenleitung andocken (die Verschaltung der Leitungen wird in Figur 3 weiter unten gezeigt). Des weiteren erkennt man einen Träger 15 für die Steckbuchsen 11 und eine Grundplatte 13 mit der Befestigung 14, die auch zum Befestigen des Rahmens 4 mit dem Deckel 6 dient. Figur 2B zeigt nun das Kabelkanalstück 1 ohne Rahmen 4 und Deckel 6, sondern nur mit einer zum Zwecke des Eingriffs für die Abzweigung eingeschnittene Öffnung O im Kabelkanal, was an beliebiger Stelle und auch an einem beliebigen, aber doch geeigneten Kabelkanal geschehen kann. Hier stösst man schon auf die ersten Schritte des Vorgehens oder Verfahrens zur Erstellung einer erfindungsgemässen Verzweigung aus einem beliebigen Kabelkanal, nämlich, dass an der gewünschten Stelle eine Öffnung O wie gezeigt eingeschnitten, ausgesägt oder sonstwie erzeugt wird. Diese Öffnung O zur Aufnahme von Montageteilen hat die Abmessungen, wie das Set der Montageteile, welches nach Wunsch zusammengestellt wird, aufweist.

Figur 3 zeigt als Zwischenschritt zur Erklärung der Erfindung eine Verkabelung, wie sie beispielsweise in einem Kabelkanal vorkommen kann. Hier ist es zur Illustration eine stark vereinfachte Verkabelung mit durchlaufenden Kabeln 35 und mit solchen S,D,B, die verzweigt sind, d.h. die aus einem weiter laufenden Hauptkabel und einem davon abzweigenden Nebenkabel bestehen. Der Begriff 'Nebenkabel' bezeichnet hier das aus dem Kabelkanal herausgeführte Teilstück des Kabels. Das Nebenkabel kann auch unterbruchsfrei in ein im Kanal verlaufendes Teilstück übergehen, wobei dann ein anderes, von diesem abgezweigtes und im Kanal verlaufendes Teilstück als Teil des Hauptkabels fungiert.

In der Figur 3 sichtbar ist auch die Aufteilung in einen im Bild oben liegenden Datenkabel-Bereich mit Datenkabeln D und einen unten liegenden Stromkabel-Bereich mit Stromkabeln S. Traditionell müsste ein zwischen diesen beiden Bereichen liegender Anschlussbereich für Anschlussvorrichtungen frei gehalten werden.

Die Abzweigung für die Stromversorgung S ist mit einer Stromkabel-Abzweigevorrichtung ("Cable Outlet") 30 bewerkstelligt, wie sie im Hause der Anmelderin hergestellt werden. Aufbau und Funktionsweise solcher Abzweigvorrichtungen sind in der internationalen Offenlegungsschrift WO 00/30218 dargelegt. Ferner sieht man drei zugeführte Datenkabel D, die nicht abgezweigt sondern über jeweilige handelsübliche Datenschnittstellen 32 herausgeführt werden. Dann erkennt man noch über einen über eine Bus-Abzweigevorrichtung 31 ("Bus Outlet"), ebenfalls durch die Anmelderin im Handel erhältlich, abgezweigten und herausgeführten Datenbus. Alle diese Ab- und Verzweigungen führen bspw. zu einem Arbeitsplatz (nicht gezeigt). Natürlich kann die Verkabelung eine beliebige Organisation in Anzahl Kabel, Anzahl Herausführungen, Anzahl Verzweigungen und so fort annehmen. Hier wird hauptsächlich gezeigt, wie man zur sauberen Versorgung, dies nicht nur für Arbeitsplätze, aus Kabelkanälen heraus mit dem Anlegen von Verzweigungen vorgehen kann.

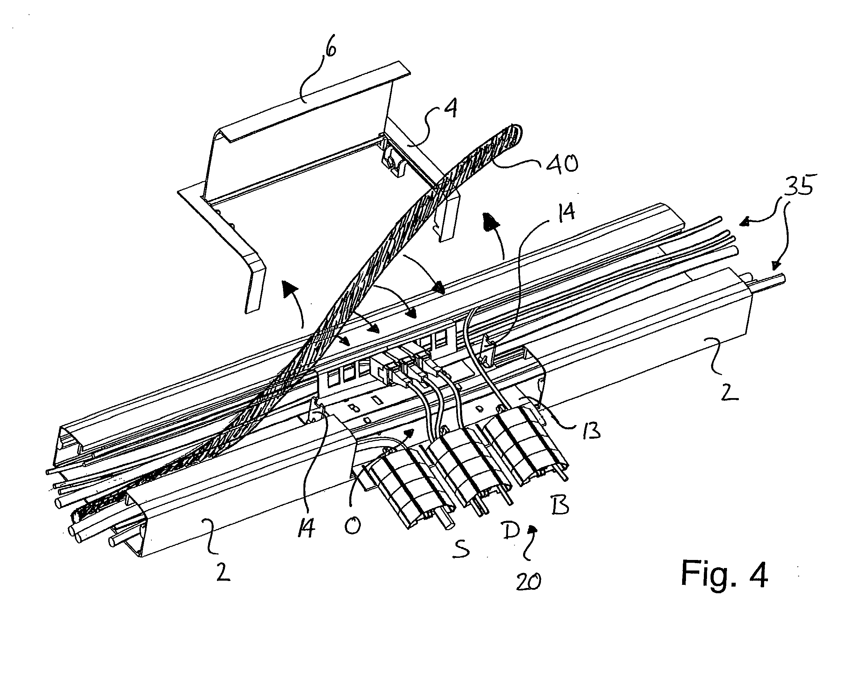

Figur 4 zeigt nun in einer Art Explosionszeichnung eine Übersicht über die erfinderische Massnahme inklusive die elegante Möglichkeit einer später zu erfolgenden zusätzlichen Einlegung weiterer Kabel oder Abzweigungen vor Ort.

Man erkennt nun folgende Details der Ausgestaltung: Im offenen Kabelkanal 1 verlaufen die Leitungen S,D,B,L,35, die oder von denen eine Abzweigung zu einem Arbeitsplatz erfolgen soll/en. An dieser Stelle, des hier nicht gezeigten Arbeitsplatzes, wird der Kabelkanal auf der Abzweigeseite 20 so eingeschnitten, bspw. durch Sägen, dass eine seitliche Öffnung O oder Lücke entsteht. Aus der Abdeckung 3, in dieser Figur nicht sichtbar, wird ein Stück herausgeschnitten, sodass beim Einsetzen in den Kabelkanal durch die Abdeckungsteile 3',3" ein Fenster entsteht (siehe Figuren 2A;2B). Das Herausschneiden eines Stücks aus der Abdeckung sowie dem Brüstungskanal bzw. Kabelkanal kann an Ort und Stelle am abgedeckten Kabelkanal erfolgen. In den so offenen Kabelkanal wird eine Grundplatte 13, auf die ein Träger 15 für die Steckbuchsen 11 aufsteckbar ist, eingelegt. Anschliessend wird die Grundplatte 13 durch Befestigungsmittel 14 fixiert, welche an geeigneten Vorrichtungen im Kabelkanal - bspw. standardmässig an dessen Boden vorliegenden C-Profilen 8 -angebracht, bspw. eingerastet werden. Die Grundplatte besitzt bspw. verschiedene Befestigungspunkte zur variablen Befestigung des Trägers 15. Somit lässt sich der Träger 15 relativ zur Grundplatte 13 verschieben; die Befestigungsmittel 14 erlauben auch ein Verschieben der Grundplatte relativ zum Kabelkanal. Die Befestigungsmittel 14 dienen bspw. auch der Befestigung für den später aufzusetzenden Rahmen 4 mit dem schwenkbarem Deckel 6.

In einem nächsten Schritt werden die Verzweigungen mit herkömmlichen Mitteln hergestellt, wozu nun grosszügig Raum zur Verfügung steht. Anschliessend werden die Verzweigungen und Herausführungen aus dem Kabelkanal herausgeführt, die Datenkabel D mit ihren Steckern eingesteckt, alles bspw. in diverse flexible Kabelkanäle 5.1;5.2;5.3 zu den Arbeitsstationen hingeführt, der Rahmen 4 aufgesetzt und der Deckel 6 geschlossen, wodurch ein Schutz gegen mechanische Einwirkungen erreicht wird und es aufgeräumt aussieht, wie mit Figur 1 begonnen und gezeigt.

Auf der Grundplatte 13 sind bspw. noch Befestigungsmöglichkeiten 16 zum Fixieren der flexiblen Kabelkanäle vorhanden. Beim Fehlen solcher Befestigungsmöglichkeiten können vor dem Aufsetzen des Rahmens 4 auch Befestigungsmöglichkeiten - bpsw. Befestigungslöcher - für entsprechende die Flexkanäle führende Adapter angebracht werden.

Alternativ zum hier Gezeigten kann auch die Grundplatte direkt am Kabelkanal fixiert werden, wobei die Grundplatte dann Befestigungsmittel für den Rahmen aufweisen kann.

Sollte später noch ein Kabel 40 in den Kabelkanal eingezogen werde, ist das ohne Weiteres und ohne jeden Aufwand möglich. Die ganze eingesetzte Vorrichtung ist nämlich frei von quer zur Kanalrichtung, d.h. der Richtung der durchlaufenden Kabel, liegenden Wänden, oder sonstigen Hindernissen. Das zusätzliche Kabel 40 kann einfach bei entferntem Abdeckelement (d.h. Rahmen 4 und Deckel 6) in den Kanal eingelegt und der Rahmen anschliessend wieder aufgesetzt werden.

Zusammengefasst: Die Montage kann an einem bestehenden Kabelkanal mit einfachen Werkzeugen bspw. einer Säge oder einem Messer zur Herstellung der Öffnung und mit einfachen Bauelementen, nämlich Befestigungsmitteln, einem Rahmen mit schwenkbarem Deckel zur Herstellung der Abdeckung und mit herkömmlichen Kontaktmitteln zur Herstellung der Verzweigung und mit wenigen Handgriffen ist die Verzweigung geschaffen. Dies kann alles vor Ort geschehen.

Bezüglich Platzmanagement: Die "Cable Outlets" und die "Bus Outlets" können zueinander versetzt, d.h. über die Länge des Kabelkanals verteilt sein. Damit muss nicht die ganze Hardware am Ort des Anschlusses sein. Das Verzweigen ist, wie oben beschrieben, eine kostengünstige und schnelle Sache.

Der Rahmen des Schwenkdeckels erlaubt mit seinen seitlich überstehenden Rändern eine ästhetische Lösung, auch wenn der Elektriker, der den Brüstungskanal aufschneidet, etwas unpräzis arbeitet und bspw. leicht schräg oder sonstwie unschön schneidet.

Das Auslagern der grossen Raum einnehmenden Teile wie bspw. Steckdosen für die Speisung aus dem Kabelkanal ist wesentlich. Falls man den Einbau einer Grundplatte vermeiden will, kann man den Rahmen des Deckels auch direkt am Brüstungskanal einschnappen lassen anstatt ihn an Befestigungselementen der Grundplatte zu befestigen. Wenn keine Datenstecker und kein diese befestigender Träger benötigt werden, kann dann ganz auf eine Grundplatte verzichtet werden.

Eine Aussparung A, durch die abgezweigten bzw. von den Steckbuchsen für die Datenleitungen weg verlaufenden Kabel nach Aussen geführt werden können, kann alternativ zur gezeigten Anordnung auch ganz im Abdeckelement, bspw. als Öffnung im Deckel vorhanden sein. Die gezeigte Anordnung, wo die Aussparung zwischen dem Abdeckelement und dem Rand der Öffnung O liegt, hat aber den Vorteil der besonders leichten Demontage des Abdeckelements.

## Patentansprüche

1. Massnahme zum Abzweigen von Kabeln (S, D, B) vor Ort an einem Kabelkanal, wobei am gewünschten Ort an einer Stelle am Kanal eine Öffnung (O) erzeugt wird, mit Abzweigvorrichtungen (30, 31) Nebenkabel von Kabeln abgezweigt werden, und dass ein die Öffnung teilweise verdeckendes Abdeckelement aufgesetzt und befestigt wird, so dass die abgezweigten Kabel durch eine Aussparung (A) aus dem Kabelkanal herausführbar sind.

2. Massnahme nach Anspruch 1, wobei der Kabelkanal ein horizontal verlaufender Brüstungskanal ist, **dadurch gekennzeichnet, dass** die Aussparung (A) so angeordnet ist, dass die abgezweigten Kabel seitlich, d.h. vertikal nach unten oder nach oben aus dem Kanal herausführbar sind.

3. Massnahme nach Anspruch 1, wobei der Kabelkanal vertikal verläuft, **dadurch gekennzeichnet, dass** die Aussparung (A) so angeordnet ist, dass die abgezweigten Kabel seitlich, d.h. horizontal aus dem Kanal herausführbar sind.

4. Massnahme nach einem der vorangehenden Ansprüche, **dadurch gekennzeichnet, dass** das Abdeckelement vom Kanal abnehmbar ist und aus einem Rahmen (4) und einem daran schwenkbar angebrachten Deckel besteht, welcher nach Fertigstellung der Arbeitsplatzverzweigung fixiert und der Deckel (4) geschlossen wird.

5. Massnahme nach einem der vorangehenden Ansprüche, **dadurch gekennzeichnet, dass** ein Träger (15) zur Befestigung von Steckbuchsen im Kabelkanal montiert wird.

6. Massnahme nach einem der vorangehenden Ansprüche, **dadurch gekennzeichnet, dass** nach dem Erzeugen der Öffnung eine Grundplatte (13) auf dem Kanalboden (7) angebracht wird.

7. Massnahme nach Anspruch 6, **dadurch gekennzeichnet, dass** die Grundplatte (13) durch Befestigungsmittel (14) im Kabelkanal fixiert wird, welche Befestigungsmittel vorzugsweise auch zur Fixierung eines Rahmens (4) mit einem schwenkbaren Deckel (6) ausgelegt sind.

8. Massnahme nach Anspruch 6 oder 7, **dadurch gekennzeichnet, dass** an der Grundplatte (13) Befestigungsmöglichkeiten (16) zum einseitigen Fixieren eines flexiblen Kabelkanals vorhanden sind.

9. Massnahme nach einem der vorangehenden Ansprüche, **dadurch gekennzeichnet, dass** die Abzweigvorrichtungen (30, 31) zueinander versetzt angeordnet werden.

10. Kabelkanal mit Verzweigung, **dadurch gekennzeichnet, dass** er eine ausgeschnittene Öffnung, und im Kanal Abzweigvorrichtungen (30, 31) aufweist, wo Nebenkabel von Kabeln abgezweigt werden, und dass zusätzlich ein fixiertes bzw. fixierbares Abdeckelement vorhanden ist.

11. Kabelkanal nach Anspruch 10, **dadurch gekennzeichnet, dass** mindestens einige der Abzweigvorrichtungen (30, 31) so beschaffen sind, dass die Abzweigung des Nebenkabels fix ist und nicht mit einem einzigen Handgriff lösbar ist.

12. Vorrichtung für eine Arbeitsplatzverzweigung, **dadurch gekennzeichnet, dass** sie ein Grundelement (13) und Mittel (14) zur Befestigung eines Abdeckelements mit Rahmen (4) und Deckel (6) aufweist, wobei Grundelement und Abdeckelement eine in eine Öffnung im Kanal einsetzbare Einheit bilden, welche frei von quer zur Kanalrichtung verlaufenden Seitenwänden ist.

13. Vorrichtung nach Anspruch 12 oder 13, **gekennzeichnet durch** einen am Grundelement (13) fixierten Träger (15) für Daten-Steckbuchsen (11).

14. Set mit Komponenten zum Abzweigen von Kabeln aus einem Kabelkanal an einen Arbeitsplatz, aufweisend Abzweigvorrichtungen (30, 31) zum Abzweigen eines Nebenkabels von einem Hauptkabel und ein Abdeckelement zum teilweisen Abdecken einer Öffnung im Kabelkanal, wobei das Abdeckelement so ausgestaltet ist, dass im montierten Zustand lediglich eine Aussparung (A) frei gehalten ist, durch welche abgezweigte Kabel aus dem Kabelkanal geführt werden können.
